# FASCICULE DE BREVET EUROPEEN

(11) **EP 0 592 743 B1**
(45) Date de publication et mention de la délivrance du brevet: **03.01.1996**
(21) Numéro de dépôt: 92402843.4
(22) Date de dépôt: 16.10.1992
(51) Int. Cl.: F16B 7/04

(54) **Attache d'assemblage de profilés et structure de profilés obtenue avec cette attache**
Befestigungsvorrichtung zum Zusammenbau von Profilen und damit hergestellte Profilstruktur
Fastener for assembly of profiles and structure of profiles made therewith

(43) Date de publication de la demande: 20.04.1994
(73) Titulaire: RAPID S.A., F-75017 Paris (FR)
(72) Inventeur: Leon, Jean-Pierre René, F-78800 Rouilles (FR)
(74) Mandataire: Durand, Yves Armand Louis

(56) Documents cités:
- EP-A- 0 519 792
- BE-A- 654 752
- GB-A- 472 391
- GB-A- 2 018 935

## Description

La présente invention a essentiellement pour objet une attache pour l'assemblage de profilés.

Elle vise également une structure ou un assemblage de profilés obtenu avec cette attache.

On a déjà proposé des systèmes d'assemblage de profilés dont les faces externes possèdent un profil en creux.

De tels systèmes sont par exemple décrits dans les documents FR-A-2 651 523 et FR-A-2 653 836.

D'une manière générale, les systèmes proposés jusqu'à maintenant pour assembler ces profilés de forme particulière étaient relativement compliqués, coûteux, et plus ou moins difficiles et longs à mettre en oeuvre.

Aussi, la présente invention a notamment pour but de remédier à ces inconvénients en proposant une attache en une seule pièce qui est peu coûteuse et permet la construction rapide et solide d'une structure de profilés ayant la forme spéciale en question.

A cet effet, l'invention a pour objet une attache d'assemblage de profilés dont les faces externes possèdent un profil en creux, caractérisée en ce qu'elle comporte une embase d'un côté de laquelle font saillie au moins deux pattes susceptibles de s'encastrer, par montage en bout sur un profilé ou premier profilé, dans respectivement deux profils en creux formant faces externes de ce profilé, et de l'autre côté de laquelle font saillie au moins deux griffes ou analogues susceptibles de s'encastrer dans l'un des profils en creux formant faces externes d'un deuxième profilé, au moins l'une des deux pattes étant prédéformée pour qu'au serrage de cette patte sur le premier profilé, elle déforme une griffe afin de permettre l'accrochage de l'attache sur le deuxième profilé.

Suivant une modification de cette attache, au moins l'une des deux pattes prédéformées est traversée par un élément fileté tel qu'une vis, pouvant être vissée sur le premier profilé.

On comprend donc déjà que la prédéformation de la patte s'annulera sous l'effet du serrage par vissage, ce qui assurera ainsi la fixation des profilés entre eux.

Selon une autre caractéristique de l'attache de cette invention, les griffes précitées constituent un prolongement des pattes en étant réunies à ces dernières par une partie de l'embase.

Les griffes sont constituées par des languettes repliées à partir du bord d'une ouverture ménagée dans l'embase.

Suivant un mode de réalisation préféré, l'embase présente une forme sensiblement carrée dont chaque côté comporte une patte précitée qui est repliée d'un côté de l'embase, l'une de ces pattes étant prédéformée, tandis que deux griffes ou languettes repliées de l'autre côté de l'embase, constituent le prolongement de deux pattes opposées.

On précisera encore ici que chaque patte comporte des bords latéraux repliés coopérant avec les profils en creux formant faces externes du premier profilé.

L'invention concerne encore une structure de profilés obtenue à l'aide d'attaches répondant à l'une ou l'autre des caractéristiques ci-dessus.

Mais les caractéristiques et avantages de l'invention apparaîtront mieux dans la description détaillée qui suit et se réfère aux dessins annexés, donnés uniquement à titre d'exemple, et dans lesquels :
La figure 1 est une vue en élévation et de côté de l'attache, à l'état de repos ;
La figure 2 est une vue en bout de l'attache, suivant la flèche II de la figure 1 ;
La figure 3 illustre en perspective comment s'effectue l'assemblage de deux profilés à l'aide de l'attache selon l'invention.

Suivant un exemple de réalisation, et en se reportant aux dessins, on voit qu'une attche conforme à cette invention comprend essentiellement une embase 1 d'un côté de laquelle font saillie quatre pattes 2, 3, 4 et 5 repliées depuis l'embase, et de l'autre côté de laquelle font saillie deux griffes ou analogues repérées en 6.

Les quatre pattes 2, 3, 4 et 5 peuvent s'encastrer dans respectivement les quatre profils en creux 7 formant faces externes d'un premier profilé 8, tandis que les griffes 6 sont susceptibles de s'encastrer dans l'un 9 des profils en creux 9, 10, 11 et 12 d'un deuxième profilé 13.

L'une 2 des pattes 2, 3, 4 et 5 est, comme on le voit bien sur les figures, prédéformée. Plus précisément, la patte 2 forme avec le plan de l'embase 1 un angle supérieur à 90°, tandis que les autres pattes 3, 4 et 5 forment avec ladite embase ou sont repliées à partir de celle-ci suivant un angle sensiblement égal à 90°.

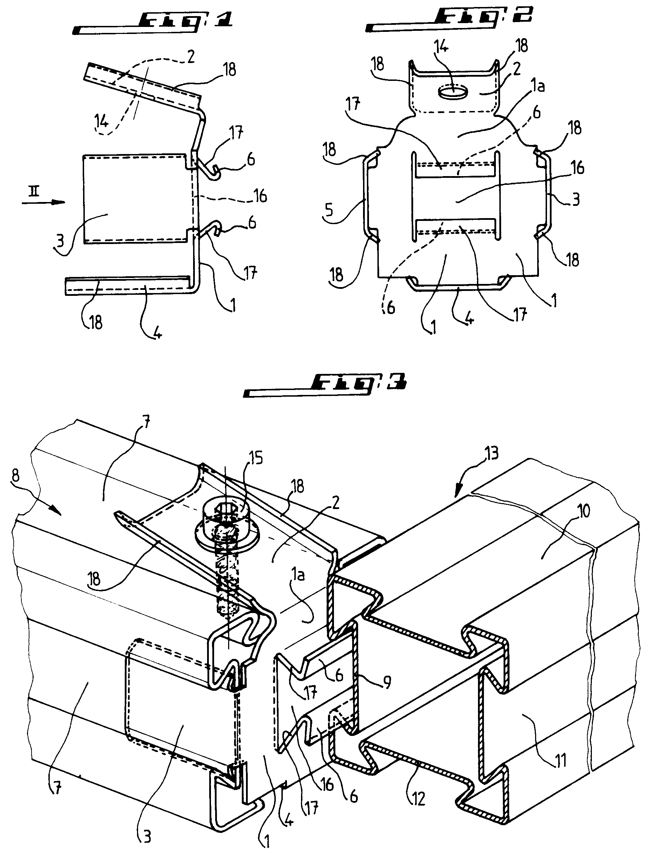

La patte 2 comporte un orifice 14 susceptible d'être traversé par une vis 15 que l'on voit bien sur la figure 3 et qui peut être vissée dans l'un des profils en creux 7 du premier profilé 8, et cela pour les raisons qui seront expliquées plus loin à propos du fonctionnement.

Comme il apparaît clairement sur les figures, l'embase 1 de l'attache comporte une ouverture sensiblement carrée 16 à partir du bord de laquelle sont repliées des languettes 17 constituant les griffes 6. Ces languettes 17 formant griffes 6 constituent en quelque sorte un prolongement des deux pattes opposées 2 et 4 en étant réunies à ces deux pattes par une portion la de l'embase 1, comme cela est bien visible sur les figures.

Chaque patte 2, 3, 4, 5 comporte des bords latéraux repliés 18 qui peuvent coopérer avec les profils en creux 7 formant faces externes du premier profilé 8.

Mais, pour une meilleure compréhension de l'invention, on décrira ci-après comment s'effectue l'assemblage des deux profilés 8 et 13 à l'aide de l'attache qui vient d'être décrite.

L'attache, comme on le voit bien sur la figure 3, est montée en bout du profilé 8, de façon que les pattes 3, 4, 5 s'encastrent dans les profils en creux correspondants 7 du profilé 8, tandis que la patte 2, qui est prédéformée, n'est pas encastrée, comme cela apparaît clairement sur la figure 3.

On présente alors l'extrémité du profilé 8 muni de l'attache en regard d'un côté du profilé 13, de manière que les griffes 6 de l'attache pénètrent dans l'un 9 des profils en creux de ce profilé 10.

La vis 15 est vissée sur le profilé 8, ce qui déforme la patte 2 qui viendra ainsi s'encastrer dans l'un des profils en creux 7 du profilé 8, cette déformation provoquant simultanément et par réaction l'écartement l'une de l'autre des griffes 6 qui viendront par conséquent mordre le profilé en creux 9 du profilé 13.

En d'autres termes, la déformaticn initiale de la patte 2 s'annule sous l'effet du vissage tout en permettant la fixation par accrochage des griffes 6 sur le profilé 13. C'est dire que les deux profilés 8 et 10 seront rapidement et solidement reliés l'un à l'autre et éventuellement à d'autres profilés grâce à l'utilisation d'autres attaches, de façon à réaliser par exemple une structure portante destinée à un usage quelconque.

On a donc réalisé suivant l'invention une attache en une seule pièce peu coûteuse, et très résistante aux efforts de traction et de glissement. En outre, une fois le serrage effectué avec la vis 15, l'attache ne déborde pas et s'intègre avantageusement dans le volume du profilé. Il faut encore ajouter que le démontage de l'attache et donc de la structure de profilés réalisée avec cette attache demeure facilement démontable, étant donné qu'il suffira simplement de dévisser une vis, à savoir la vis 15.

Il faut encore dire ici qu'une autre vis telle que 15 pourrait être prévue sur une autre patte 3, 4 ou 5 de l'attache qui serait elle aussi prédéformée, et cela sans sortir du cadre de l'invention.

C'est dire que l'invention n'est pas limitée au mode de réalisation décrit et illustré qui n'a été donné qu'a titre d'exemple.

A cet égard, on peut dire que l'attache pourrait ne comporter que deux pattes au lieu de quatre comme décrit et illustré, et que l'ouverture dans l'embase pourrait avoir une forme autre que carrée ou rectangulaire comme représenté.

L'invention comprend donc tous les équivalents techniques des moyens décrits ainsi que leurs combinaisons si celles-ci sont effectuées suivant son esprit.

## Revendications

1. Attache d'assemblage de profilés dont les faces externes possèdent un profil en creux, caractérisée en ce qu'elle comporte une embase (1) d'un côté de laquelle font saillie au moins deux pattes (2, 3, 4, 5) susceptibles de s'encastrer, par montage en bout sur un profilé, ou premier profilé (8), dans respectivement deux profils en creux (7) formant faces externes de ce profilé, et de l'autre côté de laquelle font saillie au moins deux griffes ou analogues (6) susceptibles de s'encastrer dans l'un (9) des profils en creux (9, 10, 11, 12) formant faces externes d'un deuxième profilé (13), au moins l'une (2) des deux pattes étant prédéformée pour qu'au serrage de cette patte sur le premier profilé (8), elle défcrme une griffe (6) afin de permettre l'accrochage de l'attache sur le deuxième profilé (13).

2. Attache selon la revendication 1, caractérisée en ce qu'au moins l'une (2) des deux pattes prédéformées est traversée par un élément fileté, tel qu'une vis (15) pouvant être vissée sur le premier profilé (8).

3. Attache selon la revendication 1 ou 2, caractérisée en ce que les griffes précitées (6) constituent un prolongement des pattes (2, 3, 4, 5) en étant réunies à ces dernières par une partie (1a) de l'embase (1).

4. Attache selon l'une des revendications 1 à 3, caractérisée en ce que les griffes (6) sont constituées par des languettes (17) repliées à partir du bord d'une ouverture (16) ménagée dans l'embase (1).

5. Attache selon l'une des revendications 1 à 3, caractérisée en ce que l'embase (1) présente une forme sensiblement carrée dont chaque côté comporte une patte précitée qui est repliée d'un côté de l'embase (1), l'une (2) de ces pattes étant prédéformée, tandis que deux griffes (6) ou languettes (7), repliées de l'autre côté de l'embase (1) constituent le prolongement de deux pattes opposées (2, 4).

6. Attache selon l'une des revendications 1 à 5, caractérisée en ce que chaque patte (2, 3, 4, 5) comporte des bords latéraux repliés (18) coopérant avec les profils en creux (7) formant faces externes du premier profilé (8).

7. Structure de profilés obtenue à l'aide d'attaches suivant l'une quelconque des revendications 1 à 6.

## Patentansprüche

1. Befestigungsstück zum Zusammenbau von Profilen, deren Aussenseiten eine Hohlprofilform besitzen, dadurch gekennzeichnet, dass es ein Endstück (1) aufweist, von dessen einen Seite wenigstens zwei Ansatzleisten (2, 3, 4, 5) vorspringen, die geeignet sind, sich durch Anbau am Ende eines Profils bzw. ersten Profils (8) jeweils in zwei die Aussenseiten dieses Profils bildenden Hohlprofilformen (7) einzusetzen und von dessen anderen Seite wenigstens zwei Klauen oder dergleichen (6) vorspringen, die geeignet sind, sich in die eine (9) der die Aussenseiten eines zweiten Profils (13) bildenden Hohlprofilformen (9, 10, 1 1, 12) einzufügen, wobei wenigstens die eine (2) der beiden Ansatzleisten vorverformt ist, damit beim Einklemmen dieser Ansatzleiste an dem ersten Profil (8), sie eine Klaue (6) verformt, um das Anhaken des Befestigungsstückes an dem zweiten Profil (13) zu gestatten.

2. Befestigungsstück nach Anspruch 1, dadurch gekennzeichnet, dass wenigstens die eine (2) der beiden vorverformten Ansatzleisten durch ein in das erste Profil (8) einschraubbares Gewindeelement, wie eine Schraube (15) durchsetzt wird.

3. Befestigungsstück gemäss Anspruch 1 oder 2, dadurch gekennzeichnet, dass die vorgenannten Klauen (6) einen Fortsatz der Ansatzleisten (2, 3, 4, 5) bilden, wobei sie mit diesen letzteren durch einen Teil (1a) des Endstückes (1) vereinigt sind.

4. Befestigungsstück nach einem der Ansprüche 1 bis 3, dadurch gekennzeichnet, dass die Klauen (6) durch von dem Rand einer in dem Endstück (1) gebildeten Öffnung (16) aus umgebogene Zungen (17) gebildet werden.

5. Befestigungsstück nach einem der Ansprüche 1 bis 3, dadurch gekennzeichnet, dass das Endstück (1) eine etwa quadratförmige Gestalt aufweist, deren jede Seite eine vorgenanrte Ansatzleiste, die von einer Seite des Endstückes (1) aus umgebogen ist, aufweist, wobei die eine (2) dieser Ansatzleisten vorverformt ist, während zwei von der anderen Seite des Endstückes (1) aus umgebogene Klauen (6) bzw. Zungen (7) den Fortsatz von zwei entgegengesetzten Ansatzleisten (2, 4) bilden.

6. Befestigungsstück nach einem der Ansprüche 1 bis 5, dadurch gekennzeichnet, dass jede Ansatzleiste (2, 3, 4, 5) zwei mit den die Aussenseiten des ersten Profils (8) bildenden Hohlprofilformen (7) zusammenwirkende umgebogene Seitenränder (18) aufweist.

7. Mit Hilfe von Befestigungsstücken gemäss irgendeinem der Ansprüche 1 bis 6 erhaltene Aufbau von Profilen.

## Claims

1. Fastener for assembling sectional members the external faces of which have a hollow profile, characterized in that it comprises an end piece (1) from one side of which are projecting at least two lugs (2, 3, 4, 5) adapted through endwise mounting onto one or first sectional member (8) into two hollow formations (7), respectively, forming the external faces of this sectional member and from the other side of which are projecting at least two claws or the like (6) adapted to fit into one (9) of the hollow formations (9, 10, 11, 12) forming the external faces of a second sectional member (13), at least one (2) of the two lugs being predeformed in order that upon the clamping of this lug onto the first sectional member (8), it deforms one claw (6) in order to allow the hooking of the fastener onto the second sectional member (13).

2. Fastener according to claim 1, characterized in that through at least one (2) of the two predeformed lugs extends a threaded element, such as a screw (15) which may be screwed onto the first sectional member (8).

3. Fastener according to claim 1 or 2, characterized in that the aforesaid claws (6) constitute an extension of the lugs (2, 3, 4, 5) while being united to the latter by a portion (la) of the end piece (1).

4. Fastener according to one of claims 1 to 3, characterized in that the claws (6) are constituted by tongues (17) folded back from the edge of one opening (16) formed in the end piece (1).

5. Fastener according to one of claims 1 to 3, characterized in that the end piece (1) exhibits a substantially square shape each side of which comprises one aforesaid lug which is folded back from one side of the end piece (1), one (2) of these lugs being predeformed, whereas two claws (6) or tongues (7) folded back from the other side of the end piece (1) constitute the extension of two opposite lugs (2, 4).

6. Fastener according to one of claims 1 to 5, characterized in that each lug (2, 3, 4, 5) comprises bent side edges (18) co-operating with the hollow formations- (7) forming the external faces of the first sectional member (8).

7. Structure of sectional members obtained with the assistance of fasteners according to any one of claims 1 to 6.
